# EUROPEAN PATENT APPLICATION

(11) **EP 1 136 112 A1**
(43) Date of publication of application: **26.09.2001**
(21) Application number: 00201064.3
(22) Date of filing: 23.03.2000
(51) Int. Cl.: B01D 39/14, B01D 46/52

(54) **Method of making a generally cylindrical pleated filter element**

(71) Applicant: 3M Innovative Properties Company, St. Paul, Minnesota 55133-3427 (US)
(72) Inventor: Beck, Roland, 59157 Kamen (DE)
(74) Representative: Voortmans, Gilbert J.L.

(57) **Abstract**

The method of the present invention provides a generally cylindrical filter element (10) and involves the use of a pleated filter medium (20) generally of a larger size than the filter element to be formed and generally having a rectangular shape. In a preferred embodiment, the pleated filter medium (20) is placed on a supporting means (28) that will hold the pleated filter medium in a desired configuration, i.e. the supporting means is designed to keep the pleats at the desired pleat distance during the subsequent cutting operation of the method of the invention. The supporting means (28) used has on one side a saw-tooth profile that engages with the pleats of the filter medium (20) and keeps the pleats at a desired fixed distance. The supporting means (28) also has a circular recess (34) in which a rotating knife (44) used for cutting in the method of the invention can penetrate. To cut the generally cylindrical shape of the filter medium, a rotating knife (44) penetrates the circular recess (34) of opening in the supporting means thereby cutting completely through the filter medium leaving a cylindrical filter medium (14) which can then be separated from the supporting means and the remainder (58) of the filter medium sheet.

## Description

### 1. Field of the invention.

The present invention relates to a method for producing a pleated filter element that has a generally cylindrical shape. By the term generally cylindrical is meant that a cross-section of the generally cylindrically shaped pleated filter element in a plane perpendicular to the axis of the cylinder is circular or elliptical. In a preferred embodiment in connection with the invention, the generally cylindrical pleated filter element produced has at its circumference a frame that mechanically stabilizes the pleats of the filter medium of the filter element.

### 2. Background of the invention.

Pleated filters are widely used in a broad variety of applications because pleating provides an increased surface to the fluid to be filtered thereby increasing the efficiency and reducing the pressure drop. Applications include cabin air filtration of motor vehicles, room air-cleaning, respirators and medical breathing filters. Typically the geometrical shape of the filter element is determined by the application and the design of the equipment in which the filter is to be used. A filter element usually includes a pleated filter medium surrounded by a frame to mechanically stabilize the pleat configuration. The pleated filter medium can be secured to the frame by different means such as glueing, ultra-sonic welding and the like. A further method is the so-called insert molding. With the latter technique the pleated filter medium is inserted into a tool which itself has a built-in pleat configuration with which the pleats of the filter medium engage. A thermoplastic polymer is then molded around the pleated filter medium whereby a tight connection is obtained at the interface between the filter medium and the frame. A tight connection of the filter medium to the frame is an important requirement in for example medical applications where contaminated fluid may not leak through. Insert molded filters are well known, e.g. in the patent documents DE 197 46 804 and DE 19 745 919.

The geometrical shapes of pleated filters are most often of a generally rectangular shape. However, in certain applications, generally cylindrical shaped filter elements are desired. For example, US 5,240,479 describes a generally cylindrical filter element having a high efficiency filter medium for use with respirator units. To produce the cylindrical filter element, this US patent teaches to cut the pleated filter medium in a circular pattern from a larger filter sheet. However, no details are given as to how this should be done. As an alternative, the shape of the cylindrical filter medium is obtained by ultrasonically cutting while holding the filter medium in its close-packed state. By following an oval path for the ultrasonic cutting, a cylindrical shape can be obtained when the pleats are spaced at their desired pleat distance. However, this method does not achieve the desired precision which is of particular importance if the pleated filter medium is to be stabilized by insert molding a frame thereto. Also, the use of ultrasonics to cut a pleated filter is complicated and requires substantial investment in sophisticated equipment.

It would therefore be desirable to provide a further method for producing generally cylindrically shaped filter elements. Preferably, such method should be easy, convenient and cost effective. Preferably, the method should provide clean cuts at the edge of the filter medium without damaging the filter medium. It would further be desirable to provide a method to produce generally cylindrical filter elements that are suitable for use in demanding applications, in particular that are suitable for use in medical applications.

### 3. Summary of the invention.

The method of the present invention to provide a generally cylindrical filter element involves the use of a pleated filter medium generally of a larger size than the filter element to be formed and generally having a rectangular shape. For example a sheet of pleated filter medium may be used. In the method of the present invention, the pleated filter medium is held in a desired pleat configuration while a rotating cutting knife penetrates the filter medium thereby cutting out a generally cylindrical filter medium. In a particularly preferred embodiment of the invention, the pleated filter medium is maintained in a desired pleated configuration by placing it on a supporting means that will hold the pleated filter medium in the desired configuration without moving, i.e. the supporting means is designed to keep the pleats at the desired pleat distance during the subsequent cutting operation of the method of the invention. The supporting means used in this embodiment has on one side a saw-tooth profile that engages with the pleats of the filter medium and keeps the pleats at a desired fixed distance. Generally, the desired fixed pleat distance during cutting will correspond to the pleat distance of the filter medium in the final filter, i.e. a filter including a stabilising frame around the periphery of the filter medium. Accordingly, in that case a cylindrical filter will be obtained. The supporting means also has a circular recess in which a rotating knife used for cutting in the method of the invention can penetrate.

To cut the generally cylindrical shape of the filter medium, a rotating knife penetrates the circular recess of the opening in the supporting means thereby cutting completely through the filter medium leaving a cylindrical filter medium which can then be separated from the supporting means and the remainder of the filter medium sheet.

In accordance with a variant of this preferred embodiment of the invention, the pleated filter medium is pressed against the supporting means during the cutting operation to prevent movement of the filter during cutting. This may be achieved by providing a pressing means that has a saw-tooth profile on one end. Engaging this saw-tooth profile of the pressing means with the pleats of the filter medium at the side of the filter medium opposite to the side where the pleats are supported by the supporting means and applying some pressure while cutting maintains the filter medium better in place during cutting and will generally result in a cleaner cut. Thus, in this embodiment, the pleated filter medium will generally be sandwiched between two engaging saw-tooth profiles, one of the supporting means and one of the pressing means. Preferably, the pressing means will be a cylindrical stem having on one end the saw-tooth profile.

The cylindrical stem may be surrounded by a cylindrical rotating knife which is a preferred rotating knife for use in the invention. Preferably the cylindrical rotating knife is a hollow cylinder with a relatively thin wall provided with a sharp edge which itself acts as a cutting means. The speed of such a cutting tool is chosen so that disturbances of the border of the filter can be avoided preferably by utilizing a sufficiently high number of rotations per unit of time. The rotating speed of the knife will generally depend on the type of media that is being cut and would typically be between 20 and 400 rpm. If the rotating speed of the knife becomes too low, the cut that is obtained may not be smooth and clean but may become ragged which is undesirable. In the extreme when the knife would not rotate but would simply be forced into the filter media, the cut obtained would be substantially ragged to an extent impairing the suitability of the filter medium for producing high performance filter such as medical breathing filters. The maximum rotating speed selected for the rotating knife is primarily determined by the economics of the process, i.e. rotating speeds above the speed that obtains the desired cut, will not further increase the smoothness of the cut and will thus only increase unnecessary power consumption.

The method of the present invention further allows for two or more generally cylindrical filter media to be formed simultaneously. This can be achieved by providing two or more circular recesses in the supporting means and by providing a corresponding number of rotating knifes that can simultaneously penetrate in the recesses of the supporting means so that two or more generally cylindrical filter media are cut during one cutting step. Accordingly, the productivity of the method can be improved by this embodiment.

As an alternative, to maintain the pleated filter medium in a desired pleat configuration, the pleats of the filter medium could be condensed on each other by compacting them and holding them in this state while cutting.

The method of the present invention is generally easy and convenient and can provide generally cylindrical filter elements in a cost effective way. In particular the method is simple and does not require investment in expensive equipment. Furthermore, the method typically allows to reproducibly manufacture the filter elements with clean cuts and without causing damage to the filter medium. The method of the present invention is therefore particularly suitable for use with sensitive filter media such as the high efficiency filter media used in medical applications. Typically, such high efficiency filter media has an efficiency of at least 99.97%, preferably at least 99.99% for sodium chloride particles of 0.3µm at a flow challenge of 30 l/min. Thus, in one aspect of the present invention, the method also comprises a step of including the filter element in a fluid chamber of a medical breathing filter device.

In a preferred embodiment in connection with the invention, the cylindrical filter medium is secured to a frame at its circumference so as to stabilize the pleat configuration of the filter medium after cutting. A particularly preferred embodiment to achieve this concerns inserting the cylindrical filter medium into a molding tool that has a desired pleated configuration with which the pleats of the filter medium can engage and then to mold a frame of thermoplastic polymer around the pleated filter medium at its circumference. Generally, the molding is carried out such that a small portion at the edges of the pleated filter medium at its circumference are incorporated into the frame thereby establishing a air-tight sealing at the interface of the frame and the filter medium. Because the method of the present invention can yield a clean cut and provides high precision in a reproducible way, the insert molding technique to stabilize to pleats of the filter medium with a frame can be used without risk for possible leaks at the interface between the filter medium and the frame. Alternatively, the cylindrical filter medium may be secured to a frame by spin casting a sealant as described in US 5,240,479. However, this technique although being more forgiving if the shape does not precisely match the shape of the frame, yields less attractive filters.

It will be understood by one skilled in the art that the pleat distance in the above method can be adjusted within limits prior to stabilizing the pleated filter medium. If the pleat density is modified relative to the pleat density while cutting the pleated filter medium in accordance with the method of the invention, the shape of the pleated filter medium will not be cylindrical but will have an elliptical cross-section whereby the larger axis of the ellipse can be either in the direction of the pleats or perpendicular to it. When reducing the pleat distance relative to the pleat distance during cutting the larger axis of the elliptical filter is in the pleat direction while when enlarging the pleat distance the larger axis of the ellipse will be perpendicular to the pleat direction. Preferably, the pleat distance will not be changed so that a truly cylindrical filter is obtained.

### 4. Brief description of the drawings

The invention is further illustrated by reference to the following drawings that relate to preferred embodiments of the invention. The invention, however, is not intended to be limited to the embodiments illustrated.

Figure 1 is a perspective view of a circular pleated filter configuration in which the filter means is embedded into a frame having a circular cross-section.

Figure 2 is a perspective view of an embodiment similar to figure 1 which for a better understanding is cut so that only half of the configuration is shown.

Figure 3 provides a perspective view of a pleated filter medium with an indication of the portion to be cut out.

Figure 4 provides a view of the components used in the cutting process.

Figures 5a and 5b show a side view of the cutting process prior and after the cutting of the filter configuration respectively.

Figure 6 shows a perspective view of the cutting configuration after the cutting and the removal of the generally cylindrical filter medium.

### 4. Description of the preferred embodiments of the invention.

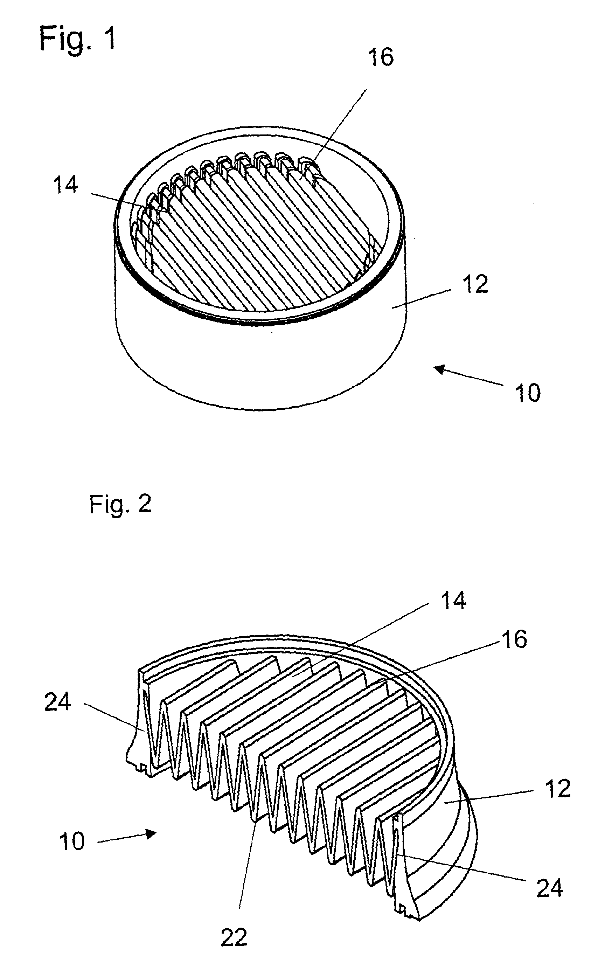

Figure 1 shows a cylindrical filter element 10 with a molded frame 12 into which a cylindrical pleated filter medium 14 is arranged. Here only the tops 16 of the pleats of the pleated filter medium can be seen on the circumference of the filter. Although the filter element 10 is cylindrical, as described above, the filter element may also deviate from a pure cylindrical shape and may have a elliptical cross-section. The size of the generally cylindrical filter element according to the invention is essentially determined by the intended application. Generally, the filter element will have a diameter in the range of about 30 millimeters to about 200 millimeters. The lower limit is essentially determined by the minimum number of pleats to be utilized. The upper limit is essentially determined by the application and the dimension of the original rectangular pleat configuration. Figure 2 shows filter element 10 cut in half for better understanding. The pleats have upper edges 16 and lower edges 22. As shown, the end portions 24 of the pleated filter medium 14 penetrate into the frame 12 which may be formed in a molding operation.

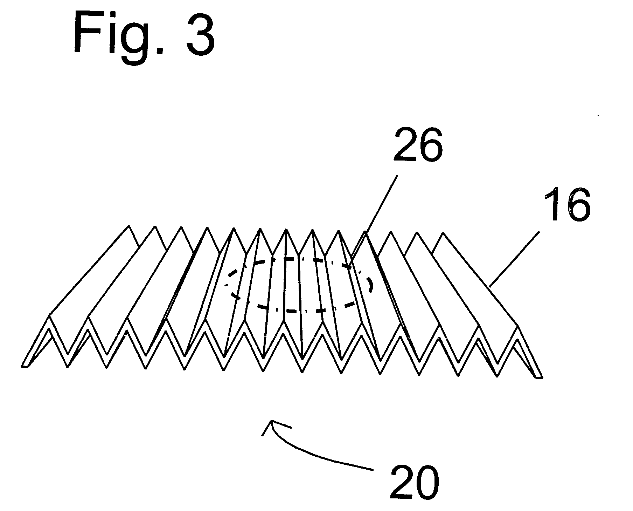

Figure 3 shows a filter medium 20 from which cylindrical filter medium 14 can be produced in accordance with the method of the invention. The pleats of filter medium 20 can be obtained by any of the methods well known to those skilled in the art. The pleated filter medium may consist of several layers as for example described in the patent document US 5,509,905. The pleated filter medium may also including adsorbing substances such as for example carbon black particles. The pleated filter medium 20 can for example consist of a support structure which is covered by one or more filter layers and a cover layer. As a material for the support structure there may be selected fibers of polypropylene having a diameter of about 0,45 mm. The openings of the reticular support structure are generally diamond-shaped and their size is typically about 3.6 mm x 4.1 mm. The support structure typically has a thickness (height) of 0.85 mm.

The filter layers of the pleated filter medium 20 preferably comprise a charged nonwoven fiber web, which fibers are formed of a nonconductive thermoplastic resin having a resistivity of at least 10¹⁴ ohm-cm, preferably at least 1016 ohm-cm. Suitable nonconductive polymers include those that have the capability of possessing a non-transitory or long lived trapped charge. The polymer can be a homopolymer or copolymer or polymer blend. The preferred polymers include polyolefins; such as polypropylene, poly(4-methyl-1-pentene) or linear low density polyethylene; polystyrene; polycarbonate and polyester. The major component of the polymer or polymer blend is preferably polypropylene because of polypropylene's high resistivity, ability to form melt-blown fibers with diameters useful in this invention, satisfactory charge stability, hydrophobicity and resistance to humidity.

The fibers of the nonwoven web of the pleated filter medium 20 are generally formed by melt blowing and preferably comprise a performance enhancing additive that increases the filtration performance of the filter medium. Potential performance-enhancing additives include those described by Jones et al., U.S. Pat. No. 5,472,481 and Rousseau et al., WO 97/07272 (U.S. Appln. No. 08/514,866), the substance of which are incorporated herein by reference in their entirety.

The basis weight of the filter layers typically varies between 10g/m² and 100g/m² but is preferably less than 60g/m². The fibers may have a cross-section varying between 1µm and 40µm. Preferably, the fibers will have a cross-section of 5µm or less.

The cover layer may comprise a spun-bonded non-woven material produced from multiply thermally bonded and randomly distributed fibers through known methods. The basis weight of this non-woven spun-bonded material is typically about 10-30 g/m² preferably 17g/m². Connection between the cover layer and the electret filter layer may be effected by known adhesives compatible with polypropylene. As materials for the fibers of the cover layer polyester, polyamide, and preferably polypropylene are suitable. The thickness of the cover layer is preferably 0.22 mm.

In a particularly preferred embodiment, the pleated filter medium 20 is capable of capturing bacteria and viral material and comprises a nonwoven web of electret charged fibers of a nonconductive thermoplastic resin, having a resistivity of at least 10¹⁴ ohm-cm. The electret charged fibers in this embodiment will have an effective diameter (EFD) of not more than 5 µm and the filter medium has an efficiency of at least 99.97% for sodium chloride particles of 0.3µm at a flow challenge of 30 l/min. Such a filter medium is particularly suitable for producing a filter element for use in a medical breathing filter.

A dashed line, 26, is indicated above the plane defined by the upper edges, 16, of the filter medium, 20. The dashed line 26 indicates the periphery were the filter medium 20 will be cut in accordance with the method of the present invention so as to yield filter medium 14 of a generally cylindrical shape.

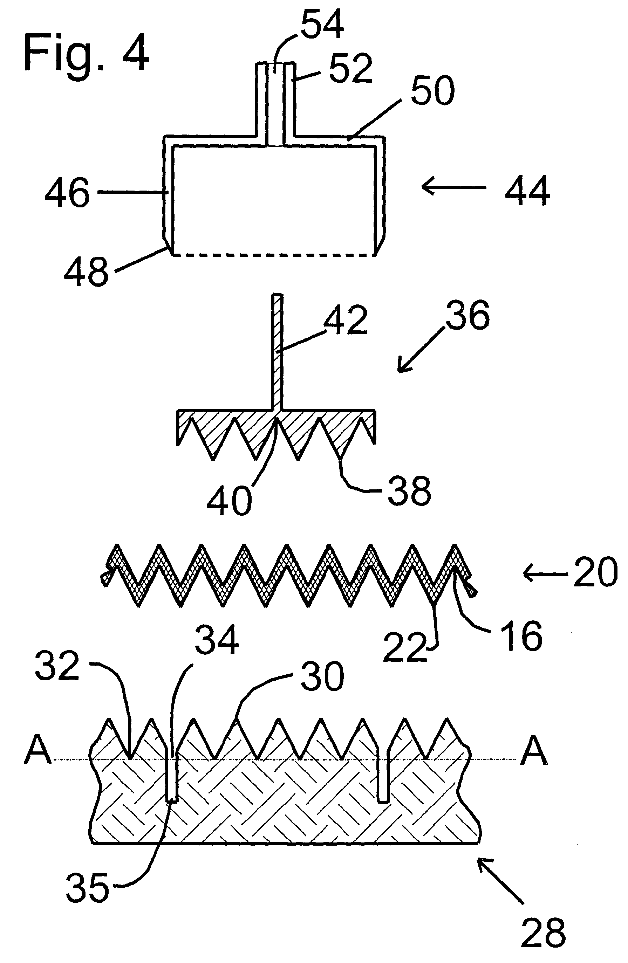

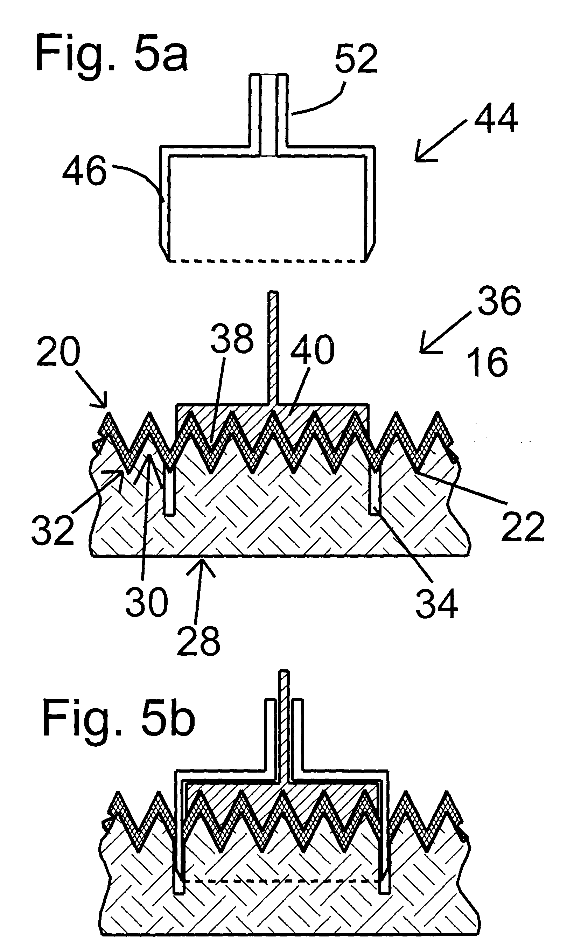

Figure 4 shows a cross-section of the individual components utilized in a preferred embodiment of the method of the present invention to produce a generally cylindrical filter element. Figure 4 shows a supporting means 28 that has a sufficient rigidity to support and maintain a desired pleat configuration of the pleated filter medium 20. Supporting means 28 may for example be made of a metal, wood or plastic. The supporting means 28 has as saw-tooth profile comprising peaks 30 separated by valleys 32. The saw-tooth profile of the supporting means 28 is configured such that the peaks 30 and valleys 32 will engage with the corresponding parts 16 and 22 of the pleated filter medium 20 so as to stabilize the pleated filter medium in a desired pleat configuration with a desired pleat distance (see figure 5a). Furthermore, the supporting means 28 includes a circular recess 34 (shown as a groove in the cross-section) for receiving rotating knife 44. The bottom surface 35 of circular recess 34, is located below the valleys 32 of the saw-tooth profile so that the rotating knife 44 may penetrate below valleys 32 and thus cut the pleated filter medium completely through (see figure 5b).

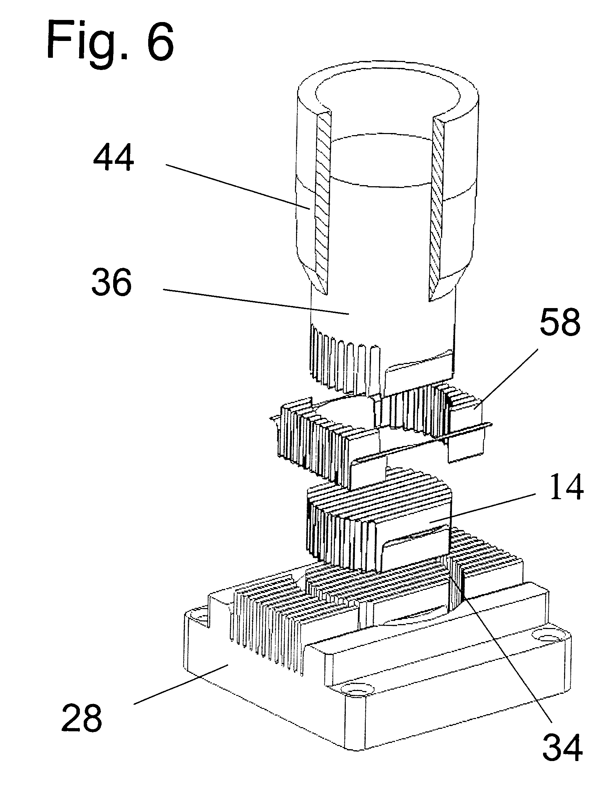

Figure 4 further shows a pressing means 36. Pressing means 36 has on one side a saw-tooth profile having peaks 38 and valleys 40 that similar as the saw-tooth profile of supporting means 28 can engage with the pleated filter medium 20. As shown in figure 5b, the pressing means 36 engages the pleated filter medium 20 from the side of the filter medium opposite to the side where that medium is supported by supporting means 28. Accordingly, pleated filter medium 20 is effectively sandwiched between the supporting means 28 and the pressing means 36. The pressing means 36 also includes an axle 42 that co-axially engages with shaft 52 of the rotating knife 44 such that the knife can freely rotate around the pressing means 36 during the cutting operation. Pressing means 36 will generally exercise a slight pressure on the pleated filter medium 20 during cutting. As an alternative to the embodiment shown in figures 4 and 6, the pressing means 36 may be in the form of a cylinder that fits in a hollow cylindrical rotating knife as shown in figure 6.

Figure 4 also shows the rotating knife 44 which comprises a cylinder 46 with a sharp cutting edge 48 defining the lower end of the cylinder 46. The upper end of the cylinder 46 is defined by a circular upper plate 50 onto which an axle 52 is attached for mounting knife 44 to for example an electrical motor or another driving mechanism (not shown). Axle 52 is generally centered on the circular upper plate 50 and is hollow so as to define a shaft 54 into which the axle 42 of the pressing means 36 may penetrate.

Figures 5a and 5b further illustrate the actual cutting process. As shown in these figures, filter medium 20 is placed onto the supporting means 28 so that the pleats of the filter means 20 are engaged with the saw-tooth profile of the supporting means 28. Subsequently, the saw-tooth profile of pressing means 36 engages with the pleats of the pleated filter medium 20 and a slight pressure is applied by the pressing means 36. Knife 44 while rotating is then caused to penetrate into the circular recess 34 by moving knife 44 towards the supporting means 28 or by moving supporting means 28 towards knife 44. While knife 44 and supporting means 28 approach each other, rotating knife 44 will start cutting the pleated filter medium 20 and when knife 44 reaches below the valleys 22 of the pleated filter medium 20 the latter will be completely cut and a cylindrical pleated filter medium 14 is formed.

As shown in figure 6, the cylindrical pleated filter medium 14 can be removed from the supporting means 28 after knife 44 and pressing means 36 have been withdrawn. Figure 6 also shows the remainder 58 of the pleated filter medium which is a sheet having a corresponding hole where the pleated filter medium 14 has been cut out. According to a particularly preferred embodiment in connection with the present invention, the pleat configuration of the cylindrical pleated filter medium 14 is subsequently stabilized by securing a frame around the periphery of the pleated filter medium 14. As has already been described above, such frame is preferably formed around the pleated filter medium 14 by means of the insert molding technique.

## Claims

1. Method for making a filter element comprising the steps of:
- providing a pleated filter medium comprising a plurality of pleats; and
- cutting out a generally cylindrical pleated filter medium by penetrating a rotating cutting knife into said pleated filter medium while maintaining said pleated filter medium in a desired pleat configuration.

2. Method according to claim 1 wherein said pleated filter medium is maintained in said desired pleat configuration by
- providing a support means comprising a saw-tooth profile and a circular recess to receive said cutting knife;
- supporting said pleated filter medium by said support means by engaging said plurality of pleats with said saw-tooth profile so as to hold said pleated filter medium in a desired configuration;
and said generally cylindrical pleated filter medium is cut out out by
- penetrating said rotating knife into said circular recess of said supporting means thereby cutting through said pleated filter medium while supported by said supporting means and
- separating a thus obtained generally cylindrical pleated filter medium from said supporting means.

3. Method according to claim 2 wherein said supporting means comprises two or more circular recesses for receiving a corresponding number of cutting knifes so as to simultaneously produce two or more circular pleated filter media.

4. Method according to any of claims 2 or 3 wherein said pleated filter medium is held against said supporting means during cutting of said pleated filter medium by a pressing means, said pressing means comprising on at least one side a saw-tooth profile and said pleated filter medium is held against said supporting means by the teeth of the saw-tooth profile engaging with the pleats of said pleated filter medium at the side of the filter medium opposite to the side where the pleats of the filter medium are engaged with the teeth of the supporting means.

5. Method according to claim 4 wherein said pressing means is in the form of a cylindrical stem having at one end said saw-tooth profile and said pressing means being enclosed in a cylindrical rotating knife.

6. Method according to any of the previous claims wherein said rotating knife comprises a hollow cylinder having at one end sharp edges to cut said pleated filter medium.

7. Method according to any of the previous claim further providing the step of securing a frame to said generally cylindrical pleated filter medium at its circumference so as to mechanically stabilize the generally cylindrical shape of the pleated filter medium.

8. Method according to claim 7 wherein said frame is secured to said generally cylindrical pleated filter medium by molding a frame of thermoplastic polymer at the circumference of the generally cylindrical pleated filter medium thereby incorporating the edges of said pleated filter medium into said frame.

9. Method according to any of the previous claims wherein said method further comprises the step of including the filter element in a fluid chamber of a medical breathing filter device.
